# EUROPÄISCHE PATENTSCHRIFT

(11) **EP 0 455 853 B1**
(45) Veröffentlichungstag und Bekanntmachung des Hinweises auf die Patenterteilung: **12.04.1995**
(21) Anmeldenummer: 90108741.1
(22) Anmeldetag: 09.05.1990
(51) Int. Cl.: A61C 13/00

(54) **Vorrichtung zur Erstellung von medizinischen, insbesondere zahnmedizinischen, Prothetik- Passkörpern**
Device for the manufacture of medical, in particular, dental prosthesis
Dispositif pour la fabrication de prothèses médicales, en particulier prothèses dentaires

(43) Veröffentlichungstag der Anmeldung: 13.11.1991
(73) Patentinhaber: SIEMENS AKTIENGESELLSCHAFT, 80333 München (DE)
(72) Erfinder: Russ, Alexander, Dipl.-Ing. (FH), D-6108 Weiterstadt (DE); Weber, Walter, Ing. grad., D-6140 Bensheim 3 (DE); Pfeiffer, Joachim, Dr. rer. nat., D-6140 Bensheim (DE)

(56) Entgegenhaltungen:
- EP-A- 0 172 299
- EP-A- 0 182 098
- EP-A- 0 294 869
- DE-A- 3 831 132
- GB-A- 2 156 712

## Beschreibung

Die Erfindung bezieht sich auf eine Vorrichtung zur Erstellung von medizinischen, insbesondere zahnmedizinischen Prothetik-Paßkörpern. Unter den Begriff 'Prothetik-Paßkörper' sollen hier sowohl alloplastische wie auch endo- und exoprothetische Paßkörper verstanden werden. Im zahnmedizinischen Bereich können diese Inlays, Onlays, Kronen, Brücken, Prothesen oder auch Implantate sein.

In der EP-A-0 182 098 und EP-A-0 054 785 wird ein Verfahren und eine Vorrichtung zur Herstellung zur verwendungsfertigen formgebenden Ausarbeitung eines insbesondere zahntechnischen Paßkörpers beschrieben. Die bekannte Vorrichtung enthält eine Bearbeitungsmaschine mit zwei Bearbeitungswerkzeugen, einem ersten Bearbeitungswerkzeug in Form eines dünnen Trennscheibenblattes und einem zweiten Bearbeitungswerkzeug in Form eines fingerförmigen Fräsers. Der fingerförmige Fräser ist bezüglich der Achse der Haltevorrichtung, die die Bearbeitungswerkzeuge trägt, im gleichen Abstand angeordnet, wie das Trennscheibenblatt, jedoch um 90° versetzt. Durch eine Drehung der Haltevorrichtung um 90° kann damit ein Werkzeugwechsel bei im wesentlichen gleichbleibender Position erfolgen. Es kann somit wahlweise das Trennscheibenblatt oder der fingerförmige Fräser zur Bearbeitung des Werkstückes eingesetzt werden.

Das Werkstück, aus dem der Paßkörper herausgearbeitet wird, ist in einer Spannvorrichtung gehaltert, die um eine Achse drehbar ist, welche im wesentlichen parallel zur Trennscheibenachse verläuft. Zur Erzeugung des Bewegungsablaufes sind zwei Schrittmotoren vorgesehen, welche unabhängig voneinander angesteuert werden. Die beiden Bearbeitungswerkzeuge werden mittels hydrodynamischer Antriebe angetrieben, das Trennscheibenblatt mittels einer Pelton-Wasserturbine und der fingerförmige Fräser mittels einer Axial-Wasserturbine. In einer weiteren Ausführungsform ist ein gemeinsamer hydrodynamischer Antrieb für beide Bearbeitungswerkzeuge vorgesehen.

Die Haltevorrichtung für die beiden Bearbeitungswerkzeuge ist einerseits um ihre Längsachse drehbar und andererseits um diese Achse längsverschiebbar gelagert, wobei auch hier zur Verstellung Schrittmotoren vorgesehen sind. Beim Bearbeitungsvorgang werden nur translatorische Bewegungen des jeweiligen Werkzeuges gegen die Achse des Werkstückhalters hin und von ihr weg ausgeführt, was durch Betätigung des einen Schrittmotors bei Stillstand des anderen geschieht. Eine Umstellung des scheibenförmigen Werkzeuges auf das fingerförmige Werkzeug kann durch eine Drehung um 90° bzw. 180° erfolgen. Die exzentrische Lage der beiden Bearbeitungswerkzeuge erlaubt es, das fingerförmige Werkzeug bezüglich der Werkstückhalterachse auf einer Kreisbahn nach links und rechts zu schwenken, wodurch an sich jegliche, in der zahnärztlichen Restauration bekannte Formen in einem Arbeitsgang gefertigt werden können.

Trotz dieser vielseitigen Einsatzmöglichkeiten der beiden Bearbeitungswerkzeuge kann eine Bearbeitung des Werkstückes nur in der Weise erfolgen, daß die Werkzeuge das Werkstück nacheinander bearbeiten. Mit den beiden Bearbeitungswerkzeugen ist außerdem nur eine grobe Bearbeitung des Werkstückes möglich. Nacharbeiten, insbesondere Polierarbeiten, können mit diesen Werkzeugen nicht durchgeführt werden; diese müßten zuvor gewechselt werden, was jedoch relativ umständlich und zeitaufwendig ist, weil hierzu die gesamte Anlage, einschließlich der Schleifwasserzufuhr, stillgesetzt werden müßte, um an die Werkzeuge bzw. ihre Aufnahmen heranzukommen.

Aus der Werkzeugmaschinentechnik ist es bekannt, Werkstücke mit Hilfe numerisch gesteuerter, mehrspindeliger Bearbeitungswerkzeuge nacheinander oder auch gleichzeitig mit verschiedenen Werkzeugen zu bearbeiten. Je nach Ausführung können bei diesen bekannten Werkzeugmaschinen mehrere Werkzeuge auf revolverförmigen Werkzeugträgern angeordnet sein, die auf einer in den drei Bearbeitungsebenen (x, y, z) verstellbaren Schlitteneinheit montiert sind (EP-A-0 172 299). Es können aber auch einzelne Bohrspindeln, die nur ein Werkzeug aufnehmen, auf einer Schlitteneinheit montiert und in den genannten Ebenen verstellbar angeordnet sein (GB-A-2 156 712). Wenngleich zwar das Werkstück bei den genannten Werkzeugmaschinen verstellbar gehaltert ist, so erfolgt während der Bearbeitung keine Verstellung des Werkstückes. Die zwar an sich vorgesehene Verstellmöglichkeit für das Werkstück dient ausschließlich der Anpassung bzw. Zuordnung des Werkstückes an das Werkzeug vor Beginn der Bearbeitung.

Der im Anspruch 1 angegebenen Erfindung liegt die Aufgabe zugrunde, eine Vorrichtung der eingangs genannten Gattung anzugeben, die gegenüber der bekannten Vorrichtung eine Verbesserung darstellt und mit der sich insbesondere auch relativ komplizierte Paßkörper, wie Kronen, rationeller erstellen lassen, und zwar ohne daß ein umständliches und aufwendiges Wechseln der Werkzeuge notwendig und eine weitere Nachbearbeitung des erstellten Restaurations-Paßkörpers nach der Bearbeitung in der Bearbeitungsmaschine erforderlich wäre.

Dadurch, daß gemäß der Erfindung zwei getrennt angeordnete und auch getrennt angetriebene Spindeln für in Rotation versetzbare Arbeitswerkzeuge vorgesehen sind, deren Bewegungen zusammen mit der Bewegung des Werkstückes simultan gesteuert werden, ist es möglich, den herzustellenden Paßkörper praktisch gleichzeitig mit zwei Werkzeugen zu bearbeiten. Damit läßt sich die Arbeitszeit zur Herstellung eines Paßkörpers wesentlich verkürzen. Vorteilhaft ist es, zwei um 180° zueinander angeordnete Spindeln vorzusehen und jede mit einem Doppelwerkzeugantrieb zu versehen. Die eine Spindel kann vorteilhafterweise mit wenigstens einem scheibenförmigen und die andere mit wenigstens einem fingerförmigen Bearbeitungswerkzeug ausgestattet sein. Mit dem scheibenförmigen Werkzeug können die äußeren Konturen des Paßkörpers herausgearbeitet werden, während sich mit dem fingerförmigen Werkzeug Vertiefungen, die durch den Radius der Scheibe bedingt nicht durch diese herstellbar sind, herausarbeiten lassen. Vorteilhafterweise sind die einander gegenüberliegenden Spindeln in einer Ebene angeordnet. Bei waagerechter Anordnung der Spindeln läßt sich die Bearbeitungsmaschine insgesamt relativ flach ausbilden. Aus gestaltungstechnischen Gründen ist es jedoch denkbar, die beiden Spindeln, oder zusätzliche weitere Spindeln, die dann noch andere Werkzeuge tragen können, auch senkrecht zu der vorgenannten Ebene oder in einem anderen Winkel dazu anzuordnen.

Die Antriebe für die Triebwellen, mit denen die Werkzeuge und das Werkstück angetrieben werden, können entweder außerhalb der Bearbeitungskammer oder direkt in dieser vorgesehen sein. Wenngleich es vorteilhaft ist, Elektromotoren, insbesondere Schrittmotoren für den Vorschub und kollektorlose Gleichstrommotoren für den Antrieb der Werkzeuge, vorzusehen, sind prinzipiell auch andere Elektromotoren sowie hydraulische oder pneumatische Antriebe denkbar.

Vorteilhafterweise sind die auf einem Werkzeugträgerkopf angeordneten beiden Werkzeuge um einen spitzen Winkel, vorzugsweise um 45°, zu einer Bezugsebene (Horizontalen) geneigt angeordnet, wobei bei dieser Anordnung das eine (schräg gestellte) Werkzeug vorteilhafterweise ein Fingerfräser ist, der zum Ausarbeiten von Okklusionen herangezogen werden kann, während das andere, parallel zur Spindel des anderen Werkzeugträgerkopfes verlaufende Werkzeug zum Ausarbeiten anderer Konturen, z.B. zum Ausarbeiten einer Zahnstumpfbohrung vorgesehen werden kann. Das schräg gestellte eine Werkzeug kann durch einfache Eintauchbewegungen in Richtung auf das zu bearbeitende Werkstück sehr leicht Okklusionen herausarbeibeiten, ohne dabei um seine Längsachse geschwenkt werden zu müssen. Beide Werkzeuge sind durch einfache 180°-Schwenkbewegungen um die Vorschubachse der Spindel ohne Einsatz von Werkzeugwechselvorrichtungen sofort einsatzbereit. Sieht man für das erste Werkzeug des anderen Werkzeugträgerkopfes einen Scheibenfräser und für das zweite Werkzeug eine Polierscheibe vor, so kann durch einfaches Schwenken des Werkzeugträgerkopfes nach der Endbearbeitung des Paßstückes deren Oberfläche anschließend fertig poliert werden.

Weitere vorteilhafte Ausgestaltungen und Weiterbildungen der Erfindung sind der nachfolgenden Beschreibung eines Ausführungsbeispieles entnehmbar.

Es zeigen:
Figur 1 eine Gesamtansicht der erfindungsgemäßen Vorrichtung in schaubildlicher Darstellung,
Figur 2 einen Teil der Vorrichtung nach Figur 1 von oben gesehen im Schnitt,
Figur 3 eine Halte- und Spannvorrichtung für das Werkstück im Längsschnitt,
Figur 4 eine vorteilhafte Ausführungsform eines Werkzeugträgerkopfes mit Zweifachwerkzeugantrieb,
Figur 5 einen Teil der erfindungsgemäßen Vorrichtung in der gleichen Ansicht wie Figur 2, jedoch in einer anderen, darunter liegenden Schnittebene,
Figur 6 den in Figur 5 dargestellten Teil der Vorrichtung in einer Frontansicht, ebenfalls im Schnitt,
Figur 7 einen Ausschnitt entlang der Linie VII-VII in Figur 6,
Figur 8 eine andere Ausführungsform der Bearbeitungsmaschine im Schnitt,

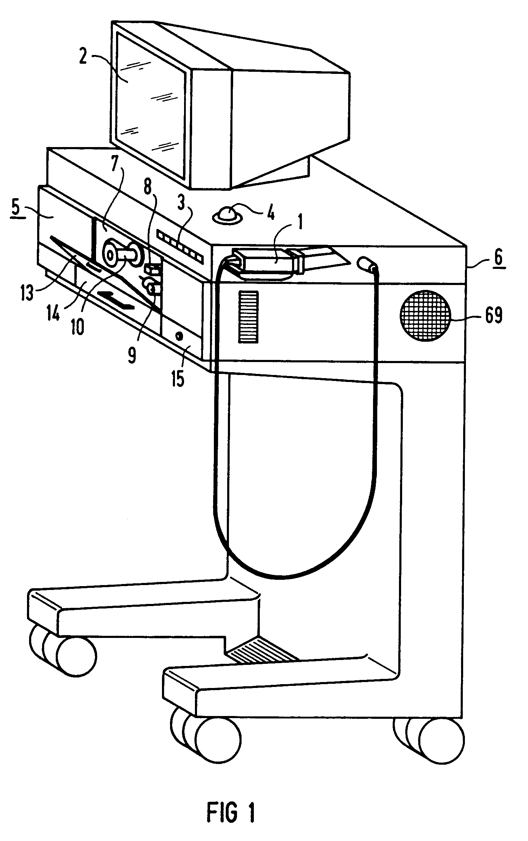

Die Figur 1 zeigt in einer schaubildlichen Darstellung die Gesamtanordnung des erfindungsgemäßen Gerätes in einer Aufführungsform zur Herstellung eines Zahnrestaurations-Paßkörpers, z.B. einer Krone. Der zu erstellende Paßkörper kann mit Hilfe eines optischen Abdruckverfahrens unter Zuhilfenahme eines Computers an einem Bildschirm konstruiert und anschließend in einer Bearbeitungsmaschine aus einem geeigneten Werkstück, z.B. aus Dentalkeramik, hergestellt werden. Die einzelnen Komponenten dieses Gerätes sind eine optische Kamera 1, ein Bildschirm 2, eine Tastatur 3, eine Zeichenkugel 4 (Trackball), eine allgemein mit 5 bezeichnete Bearbeitungsmaschine sowie im Gehäuse 6 enthaltene, nicht näher dargestellte weitere mechanische, elektrische und elektronische Komponenten, die mit den vorgenannten Komponenten zusammenarbeiten, um den Paßkörper erstellen zu können. Der prinzipielle Aufbau und die Wirkungsweise eines solchen Gerätes sind in der eingangs genannten europäischen Patentschrift beschrieben.

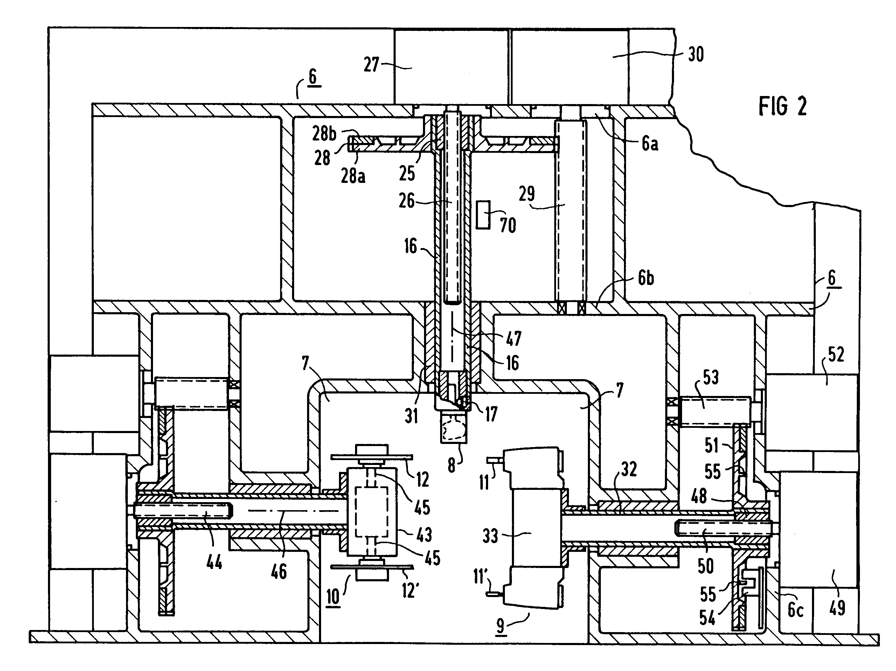

Das Gehäuse 6 bildet eine Bearbeitungskammer 7, in die einige, später noch näher erläuterte Komponenten der Bearbeitungsmaschine ragen. Diese sind im wesentlichen eine Aufnahme- und Haltevorrichtung für ein Werkstück 8, aus dem der zu erstellende Paßkörper gefertigt wird sowie zwei einander gegenüberliegende Spindelanordnungen 9 und 10, welche je zwei Werkzeuge (in FIG 2 mit 11, 11' und 12, 12' bezeichnet) zur Bearbeitung des Werkstückes 8 tragen. Die Bearbeitungskammer 7 kann mittels eines vorzugsweise durchsichtigen Deckels 13 während der Bearbeitung geschlossen werden. Das Gehäuse 6 enthält unterhalb der Bearbeitungsmaschine 5 einen als Schublade ausgebildeten Wassertank 14 sowie eine Kammer 15, in der ein später noch näher erläuterter Behälter zur Aufnahme eines Pflegemittels gehaltert ist.

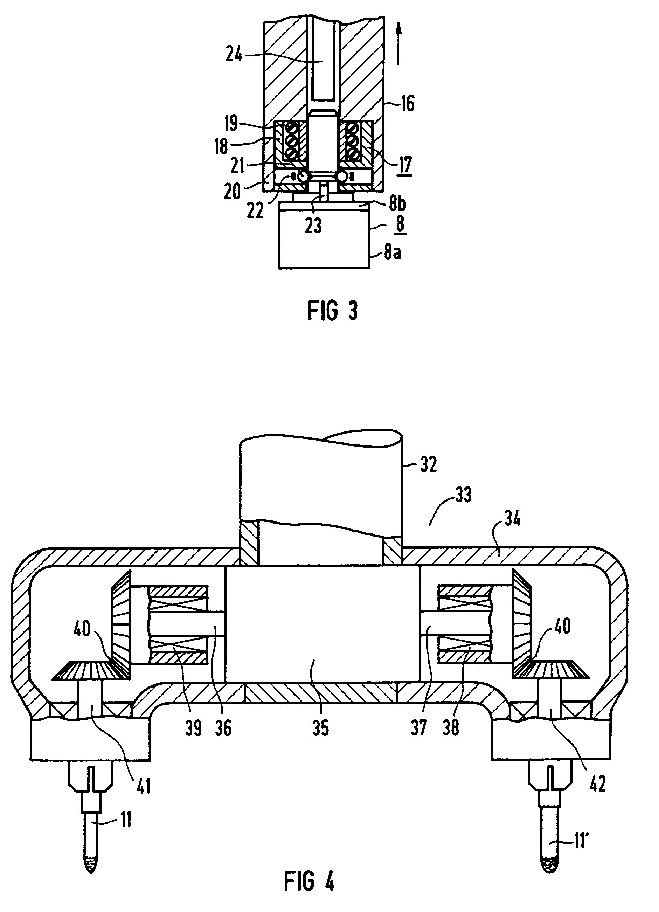

Anhand der Figur 2 wird die Bearbeitungsmaschine 5 näher erläutert. Die Figur 2 zeigt dabei die Bearbeitungsmaschine im Bereich der Spindelanordnungen 9, 10, geschnitten in einer Draufsicht. Zunächst wird die Halterung und Lagerung des Werkstückes 8, aus dem der Paßkörper erstellt werden soll, näher beschrieben. Hierzu wird auch auf Figur 3 Bezug genommen, welche einen Ausschnitt im Bereich der Halterung des Werkstückes 8 zeigt. Das Werkstück 8 besteht aus einem Keramikblock 8a, der an einem metallischen zapfenförmigen Halter 8b durch Kleben oder dergleichen befestigt ist. Das Werkstück ist am Ende einer als Hohlwelle ausgebildeten Spindel 16 eingesteckt und wird mittels einer mit 17 bezeichneten Spannvorrichtung dreh- und zugfest gehalten. Die Spannvorrichtung 17 besteht im wesentlichen aus einer Federhülse 18, mehreren Federelementen 19, einer Außenhülse 20 sowie mehreren Rastkugeln 21, die durch einen Federring 22 gehalten werden. Der Halter 8b des Werkstückes 8 wird in die Spannvorrichtung so eingesteckt, daß ein stirnseitig an der Spannvorrichtung vorgesehener Schlitz mit einem am Halter vorgesehenen Stift 23 übereinstimmt und die durch den Federring belasteten Kugeln in eine entsprechende Auskerbung am Halter 8b eingreifen. Halter und Werkstück sind damit exakt positioniert und gegen Verdrehung gesichert. Die Federhülse mit den Federelementen dient dazu, dem Halter einen besseren Halt und eine bessere Führung zu geben. Vorteile dieser Spannvorrichtung sind unter anderem eine sehr einfache Handhabung; der Halter wird nur eingeschoben und verriegelt sich selbst. Nach Beendigung der Bearbeitung, in der die Spindel in der angegebenen Pfeilrichtung axial zurückgefahren ist, wird das stirnseitige Ende des Halters 8b gegen einen gegenüber der Spindel 16 ortsfesten angeordneten Ausstoßbolzen 24 gefahren, wodurch das Werkstück samt Halter aus der Spannvorrichtung ausgeworfen wird.

Die als Hohlwelle ausgebildete Spindel 16 weist an ihrem dem Werkstück 8 abgewandten Ende eine Spindelmutter 25 auf, die mit einer Gewindespindel 26 zusammenwirkt, die direkt mit einem am Gehäuse 6 befestigten Antriebsmotor 27 gekuppelt ist.

Mit der Spindel 16 drehfest verbunden ist ein Zahnrad 28, welches mit einer Zahnwelle 29 in Eingriff steht, die zwischen zwei Wandungen 6a, 6b des Gehäuses 6 gelagert und ebenfalls direkt mit einem zweiten Antriebsmotor 30 gekuppelt ist. Die Achsen von Zahnwelle 29 und Spindel 16 verlaufen parallel. Der Antriebsmotor 30 mit der Zahnwelle 29 dient dazu, die Spindel 16 in eine Drehbewegung zu versetzen, während der Antriebsmotor 27 mit der Gewindespindel 26 für einen Längsvorschub der Spindel 16 sorgt. Zu diesem Zweck ist das dem Werkstück zugewandte Lager 31 als Längs- und Drehlager ausgebildet. Das Zahnrad 28 ist als spielfreies Doppelzahnrad ausgebildet; es besteht aus zwei gleichachsig nebeneinander angeordneten Zahnradhälften 28a, 28b, die durch ein (nicht dargestelltes) Federelement gegeneinander abgestützt sind, wodurch unabhängig von der Drehrichtung des Antriebs jeweils eine Zahnflanke von der einen oder anderen Zahnradhälfte mit der Zahnwelle 29 in Eingriff steht. Ein solches spielfreies Doppelzahnrad bildet eieinerseits ein geräuscharmes Präzisionsgetriebe, andererseits dient es der sicheren und exakten Bewegungsübertragung bei einem Längsvorschub der Spindel. Die Eingriffsverbindung Spindelmutter 25, Gewindespindel 26 und Hohlwelle 16 fordert in Axialrichtung nur geringen Raumbedarf. Der Antriebsmotor 27 bildet gleichzeitig ein Festlager für die Einheit und ist direkt, also ohne Kupplung, mit der Gewindespindel 26 verbunden. Gewindemutter 25 und Gewindespindel 26 können als spielfreier Kugelgewindetrieb oder auch als spielfreier Gleitgewindetrieb aufgebaut sein. Bei einem Gleitgewindetrieb kann eine spielfreie Mutter mit der Hohlwelle kombiniert werden.

Nachfolgend wird der Aufbau der einen Spindelanordnung 9 näher erläutert; die gegenüberliegend angeordnete Spindelanordnung 10 ist bis auf die Anordnung der Werkzeuge völlig gleich ausgebildet.

Die Spindelanordnung 9 enthält ebenfalls eine als Hohlwelle ausgebildete Spindel 32, deren eines Ende in die Bearbeitungskammer 7 ragt und dort einen Werkzeugträgerkopf 33 trägt. Der Aufbau des Werkzeugträgerkopfes 33 wird anhand der Figur 4 näher erläutert, die den Werkzeugträgerkopf in der gleichen Draufsicht, jedoch im Längsschnitt zeigt. In einem fest mit der Spindel 32 verbundenen Gehäuse 34 ist mittig ein Elektromotor 35 angeordnet, dessen beidseitige Antriebswellen 36, 37 einerseits mit einem rechtsgängigen Freilaufgetriebe 38 und andererseits mit einem linksgängigen Freilaufgetriebe 39 gekuppelt sind. Über eine Kegelverzahnung 40 wird die Drehbewegung vom Motor 35 auf die beidseitig vorhandenen Werkzeugantriebswellen 41, 42 um 90° umgelenkt. Die Achsen dieser Triebwellen verlaufen also parallel zur Spindelachse der Spindel 32. Am freien Ende der Triebwellen 41, 42 sind mittels geeigneter Spannvorrichtungen die Bearbeitungswerkzeuge 11, 11' gehaltert.

Die Spannvorrichtungen können - wie die Spannvorrichtung 17 für das Werkstück - ebenfalls als sogenannte Schnellspannvorrichtungen ausgebildet sein.

Der im Werkzeugträgerkopf 33 vorgesehene Freilauf hat den Vorteil, daß je nach Drehrichtung nur das eine oder andere Werkzeug in Betrieb ist, wodurch sich die Einschaltdauer des jeweiligen benutzten Getriebes und damit auch der Verschleiß des an sich hochtourigen Getriebes auf ein Minimum reduzieren läßt.

Der gegenüberliegend angeordnete Werkzeugträgerkopf 43 für die Spindel 44 ist gleich aufgebaut; es entfällt lediglich die Kegelradverzahnung 40, so daß die mit 45 bezeichneten Werkzeugantriebswellen des im Werkzeugträgerkopf angeordneten Motors rechtwinkelig zur Spindelachse 46 verlaufen. Die Werkzeugachsen 45 verlaufen demnach auch parallel zur Achse 47 der Werkstückvorschubspindel 26. Der Werkzeugträgerkopf 43 ist im Gegensatz zum Werkzeugträgerkopf 33, der fingerförmige Werkzeuge trägt, mit scheiben- oder topfförmigen Werkzeugen 12, 12' belegt. Vorzugsweise ist die eine Seite mit einer scheibenförmigen Schleif- bzw. Frässcheibe (12) und die andere mit einer topfförmigen Polierscheibe (12') versehen, die aus mit Diamanten besetztem Weichstoff bestehen kann oder auch als austauschbare Bürste ausgebildet sein kann. Dadurch, daß der Werkzeugträgerkopf 43 um die Spindelachse 46 um 180° gedreht werden kann, kann ein Schleifen und anschließendes Polieren des Paßkörpers praktisch ohne Arbeitsunterbrechung durchgeführt werden.

Die beiden Spindelanordnungen 9 und 10 weisen bezüglich ihrer Schwenk- und Vorschubbewegung gleiche Antriebs- und Antriebsübertragungselemente auf, die im folgenden für die Spindelanordnung 9 erläutert werden.

An der als Hohlwelle ausgebildeten Spindel 32 ist eine Spindelmutter 48 befestigt, die mit einer von einem Motor 49 angetriebenen Gewindespindel 50 in Eingriff steht. Mit diesen Antriebselementen kann die Spindel 32 in Achsrichtung verstellt werden.

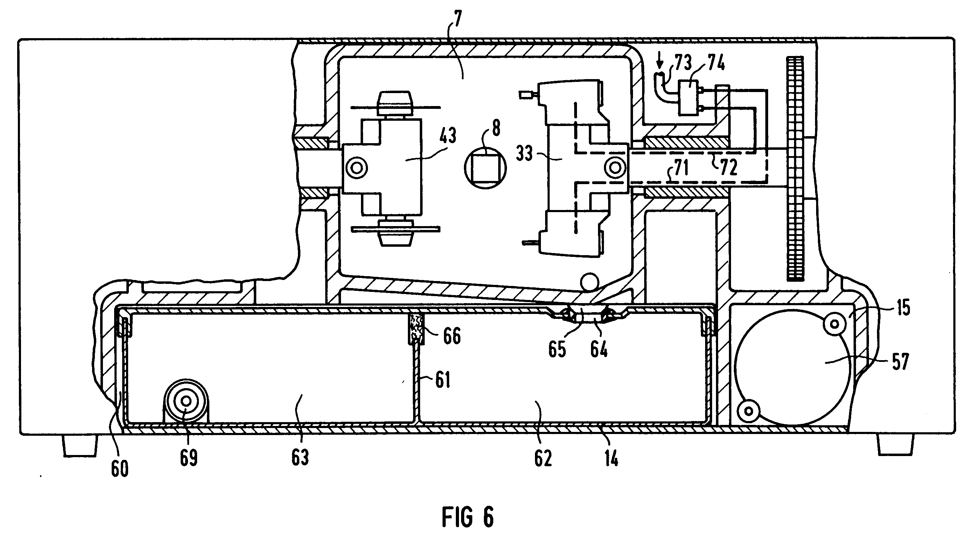

Mit der Spindel 32 drehfest verbunden ist wiederum ein Doppelzahnrad 51, welches ähnlich aufgebaut ist wie das mit 28 bezeichnete. Dieses Doppelzahnrad 51 kämmt mit einer von einem weiteren Antriebsmotor 52 angetriebenen Zahnwelle 53. Mit diesem Antriebselement kann der gesamte Werkzeugträgerkopf 33 um die Spindelachse um wenigstens 90°, vorzugsweise jedoch um 180°, geschwenkt werden. Ein Schwenken um 90° ist angezeigt, um den Werkzeugträgerkopf aus der in Figur 2 gezeigten Arbeitsstellung in eine Grund- oder Ruheposition (Fig. 6) zu schwenken, in der der Zugang zu dem Werkstück 8 erleichtert ist.

Nachdem der Vorschub der einzelnen Spindeln sehr präzise erfolgen muß, ist es notwendig, die hierzu vorgesehenen Antriebsmotoren genau anzusteuern. Zweckmäßig ist es deshalb, Schrittmotoren zu verwenden, die an sich in beliebig kleinen Schritteinheiten angesteuert werden können. Um dennoch Schrittverluste ausgleichen zu können, wird vorgeschlagen, die Schrittmotoren mit einer Rückmeldung zu versehen. Diese kann, wie in Figur 2 für die Vorschubspindel 32 gezeigt ist, darin bestehen, daß in Nähe der Vorschubspindel, oder mit dieser gekoppelt, auf Widerstands-, Kapazitäts-, Induktivitäts-, Ultraschall-, Magnet- und/oder optischer Basis aufbauende Sensormittel vorgesehen sind, die über einen nicht dargestellten Rechner mit dem zugehörigen Schrittmotor elektrisch verbunden sind. Durch ein solches Wegmeßsystem, welches sowohl analog als auch inkremental arbeiten kann, ist es möglich, die Genauigkeit der Schleifmaschine zu erhöhen. Das Wegmeßsystem ist jedoch nicht an Schrittmotoren für den Antrieb gebunden; es können auch andere geeignete Antriebsmotoren, sei es elektrische oder pneumatische Motoren, verwendet werden.

An einer Gehäusewand 6c ist eine Gabellichtschranke 54 angeordnet, die mit einem durch einen Schlitz unterbrochenen Ring 55 des Doppelzahnrades 51 so zusammenwirkt, daß die Ruhe- oder Ausgangsstellung der Spindel 32 genau erfaßt werden kann, und zwar sowohl in bezug auf ihre Dreh-(Winkel-)Stellung als auch in bezug auf ihre Position in Richtung der Vorschubachse. Während letztere durch Eintauchen des Ringes 55 in die Gabellichtschranke erfaßt wird, wird die Winkelstellung durch ein Signal beim Durchfahren des den Ring 55 unterbrechenden Schlitzes durch die Lichtschranke erfaßt.

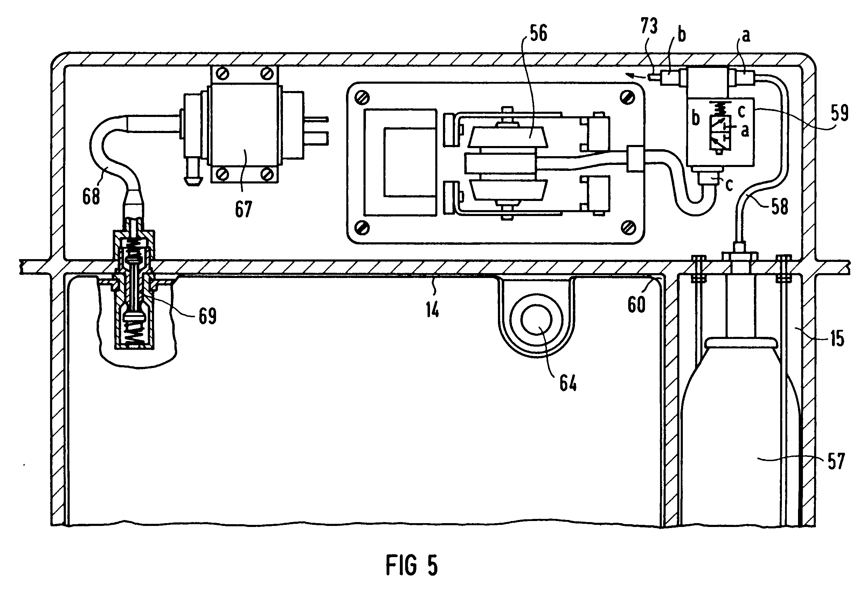

Um zu verhindern, daß über den Wellenaustritt der Winkelgetriebe der Werkzeugträgerköpfe Schleifspäne und Kühlflüssigkeit in die Lager der Getriebe eindringen können, wird gemäß einer weiteren vorteilhaften Ausgestaltung der Vorrichtung (FIG 5/6) diesen Getrieben über eine im Gehäuse angeordnete Druckluftquelle 56 (z.B. einer Membranpumpe) ein permanenter Luftstrom zugeführt, der einen geringen Überdruck in den Getrieben schafft und so ein Eindringen von Fremdstoffen in die Getriebe verhindert. Der Anschluß der entsprechenden Druckluftleitung (in Fig. 6 mit 71 und 72 bezeichnet) erfolgt an geeigneter Stelle im Bereich der Hohlwelle der Spindel. Vorteilhafterweise wird über die gleichen Leitungen oder auch über separate Leitungen den Getrieben zur Reinigung und Schmierung der Verzahnungen und Lager in periodischen Abständen, und zwar abhängig von der Laufzeit, aus einer automatischen Schmiervorrichtung ein Pflegemittel zugeführt. Die Anordnung einer solchen Schmier- und Pflegeeinrichtung wird anhand der nachfolgenden Figuren näher erläutert.

Die Figur 5 zeigt hierzu das Gehäuse in Ebene der Schublade 14 und der Kammer 15 (Fig. 1) geschnitten in einer Draufsicht. In der Kammer 15 ist ein flaschenförmiger Behälter 57, der ein geeignetes Schmier- und/oder Pflegemittel enthält. Das Pflegemittel kann in flüssiger oder auch in sprayhaltiger Form enthalten sein. Vorteilhafterweise ist eine handelsübliche Spezialpflegemittelspraydose verwendet, die leicht auswechselbar in der Kammer 15 gehaltert ist. Die Sprayflasche 57 ist mittels Anschlußleitung 58 mit einem Magnetventil 59 verbunden, mit dessen Hilfe in bestimmten Zeitintervallen Pflegemittel entweder in die vorerwähnten Luftleitungen 71, 72 oder über separate Leitungen zu den Getriebeteilen der Werkzeugträgerköpfe 33, 43 geführt werden kann. Im Ausführungsbeispiel ist das Magnetventil 59 - wie durch die Symbole gekennzeichnet - ein 2/3 Wegeventil, welches normalerweise geschlossen ist, d.h. bei dem normalerweise die Verbindung a und b gesperrt, dagegen b und c geöffnet ist. In dieser Ventilstellung kann von der Druckluftquelle 56 über den Durchgang c-b und die Leitung 73, die zu einem Verteiler 74 (Fig. 6) führt, Druckluft in die Getriebe der Werkzeugantriebe geleitet werden. Wird das Magnetventil 59 aktiviert, haben a-b Durchgang. In dieser Stellung kann Pflegemittel aus dem Behälter 57 zu den Getrieben geleitet werden. Die Zufuhr des Pflegemittels kann zeitgesteuert erfolgen, d.h. das Magnetventil kann vorteilhafterweise mit Hilfe eines Zeitgliedes oder einer Recheneinheit gesteuert werden.

Anstelle der aufgezeigten Version mit einem von der Sprayflasche getrennt angeordneten Magnetventil kann auch eine Lösung vorgesehen werden, bei der das Magnetventil direkt auf das Ventil der Sprayflasche aufgeschraubt ist. Auch eine mechanische Betätigung des normalerweise in der Sprayflasche eingearbeiteten Ventiles über einen Hubmagneten ist denkbar.

Alternativ zu der dargestellten Version ist es auch denkbar, Pflegemittel aus einem Vorratsbehälter zu entnehmen und mittels eines geeigneten Zerstäubers, z.B. eines Ultraschallzerstäubers, fein verteilt in den Luftstrom einzubringen. Des weiteren ist eine Version denkbar, bei der Öl aus einem Vorratsbehälter mittels eines Dochtes od.dgl. gesaugt und anschließend mittels Heizvorrichtung verdampft wird.

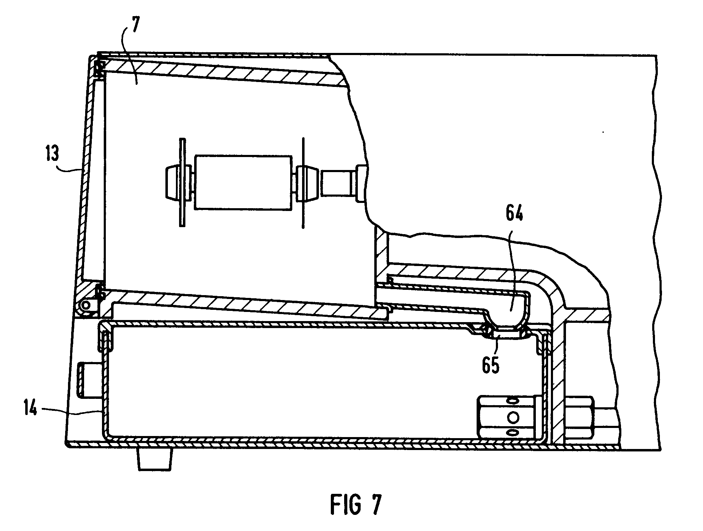

Wenden wir uns nun der Schleifwasserversorgung zu, die bei einem Schleif- oder Fräsvorgang zur Kühlung und Bespülung von Werkzeug und Werkstück notwendig ist. Bezug genommen wird auf die Figuren 5, 6 und 7 in Verbindung mit Figur 1.

Das Gehäuse 6 enthält neben der Kammer 15, welche den Behälter 57 aufnimmt, eine weitere Kammer 60, in der der als Schublade ausgebildete Wassertank 14 ausziehbar gehaltert ist. Der Wassertank 14 und ist durch eine mittig angeordnete Trennwand 61 in zwei Abschnitte 62, 63 unterteilt. In den Wassertankabschnitt 62 führt ein Rücklaufrohr 64, welches mit der Bearbeitungskammer 7 verbunden ist und welches das verbrauchte Schleifwasser in den Wassertankabschnitt 62 leitet. Das Rücklaufrohr 64 ist leicht federnd ausgebildet und der Auslaufstutzen leicht konisch ausgebildet, so daß ein leichtes Ein-und Ausschieben des Wassertankes 14 bei paßgerechtem Sitz des Stutzens auf der korrespondierenden Einlauföffnung 65 gegeben ist. Das sich im Wassertankabschnitt 62 ansammelnde Wasser tritt bei einer bestimmten Füllhöhe, die durch die Höhe der Trennwand 61 gebildet ist, in den Wassertankabschnitt 63 über. Die groben Schmutzanteile setzen sich auf dem Boden des Wassertankabschnittes 62 ab; kleinere Schwebeteilchen können durch ein auf die Trennwand aufgesetztes Filter 66 zurückgehalten werden. Das sich im Wassertankabschnitt 63 ansammelnde Wasser wird mittels einer Kühlwasserpumpe 67 über Anschlußleitungen 68 aus dem Wassertankabschnitt 63 abgesaugt und wieder in die Bearbeitungskammer geleitet. Wassertank 14 und Anschlußleitung 28 sind mit einer Schnellkupplung 69 mit selbstschließendem Ventil versehen, welches beim Entnehmen der Schublade schließt und im eingeschobenen Zustand öffnet und so den Behälter mit der Kühlwasserpumpe verbindet.

Der Wassertank 14 kann auch nur einen Teil der Schublade einnehmen; in einem getrennt davon angeordneten Fach der Schublade können Hilfswerkzeuge, Schleifscheiben, etc. untergebracht sein.

Des weiteren ist es denkbar, in die Schublade einen separaten Wassertank vorzusehen.

Die nachfolgend beschriebenen Merkmale betreffen Maßnahmen, um Temperaturschwankungen zu kompensieren.

Um das hohe Maß an Präzision bei der Vorrichtung zu erfüllen, ist es notwendig, ein besonderes Augenmerk auf die thermisch bedingte Ausdehnung einzelner Bauteile während des Betriebes der Vorrichtung zu legen. Gemäß einer vorteilhaften Ausgestaltung der erfindungsgemäßen Vorrichtung ist deshalb die Materialanordnung der Gehäuseteile, der Spindeln und der Hohlwelle so getroffen, daß diese Bauteile aus einem Material mit aufeinander abgestimmten, beispielsweise gleichen oder einander ähnlichen thermischen Längenausdehnungskoeffizienten bestehen. So kann beispielsweise das Gehäuse aus Messing, welches einen Längenausdehnungskoeffizienten von 18,4 * 10⁻⁶ aufweist, und Spindel und Hohlwelle aus Neusilber, welches einen Ausdehnungskoeffizienten von 18 * 10⁻⁶ hat, bestehen. Alternativ ist es denkbar, das Gehäuse aus Gußeisen mit einem Ausdehnungskoeffizienten von 10 * 10⁻⁶ und Spindel und Hohlwelle aus Chromstahl, welches ebenfalls einen Ausdehnungskoeffizienten von 10 * 10⁻⁶ aufweist, zu erstellen.

Eine weitere Maßnahme kann darin bestehen, daß mit Hilfe einer Temperaturmessung eine rechnergesteuerte Nachstellung der Spindel erreicht wird. Hierzu kann, wie in Figur 2 anhand der Spindel 26 gezeigt, in Nähe der Spindel ein Thermofühler 70 vorgesehen sein, der über einen nicht dargestellten Kleinrechner mit dem Antriebsmotor für den Längsvorschub verbunden ist. Temperaturschwankungen, die durch den Thermofühler 70 erfaßt werden, können, je nachdem, ob es sich um eine Dehnung oder Kürzung handelt, über eine Spindelnachstellung kompensiert werden.

Eine weitere Maßnahme kann darin bestehen, die Betriebstemperatur innerhalb des Gehäuses möglichst konstant zu halten. Dies kann dadurch erreicht werden, daß an geeigneter Stelle im Gehäuse 6, z.B. an der in Figur 1 mit der Position 69 bezeichneten Stelle, ein Ventilator angeordnet ist, der kühle Außenluft ins Gehäuseinnere leitet. Um die Betriebstemperatur in der Aufwärmphase schneller zu erreichen, kann mit zwei "Kühlkreisen" gearbeitet werden. Ein erster Ventilator, der die Luft im Gehäuseinneren umwälzt, sorgt für ein gleichmäßiges Kühlen bzw. Erwärmen sämtlicher Baugruppen. Ein zweiter Ventilator, der relativ kühle Außenluft nur dann zuführt, wenn die Betriebstemperatur erreicht wird, sorgt dafür, daß eine bestimmte vorgeschriebene Betriebstemperatur nicht überschritten wird. Das gesamte Kühlsystem kann mit Hilfe eines Zweipunktreglers relativ einfach geregelt werden.

Eine weitere Maßnahme kann schließlich darin bestehen, daß die Schleifeinrichtung durch entsprechend gewählte Bestromung der Motoren, z.B. mit Hilfe eines "Haltemoments", schon während der Aufnahme und Konstruktionsphase, während der die Spindeln noch nicht zu arbeiten brauchen, auf Betriebstemperatur gebracht werden. Anschließend kann durch entsprechende Zwangsbelüftung bzw. durch Umwälzen der Luft, wie vorbeschrieben, die Temperatur auf gleichmäßigem Niveau gehalten werden. Die bereits vorgetragene Möglichkeit der Temperaturkompensation durch Messung der Temperaturen erfolgt zweckmäßigerweise an mehreren relevanten Stellen.

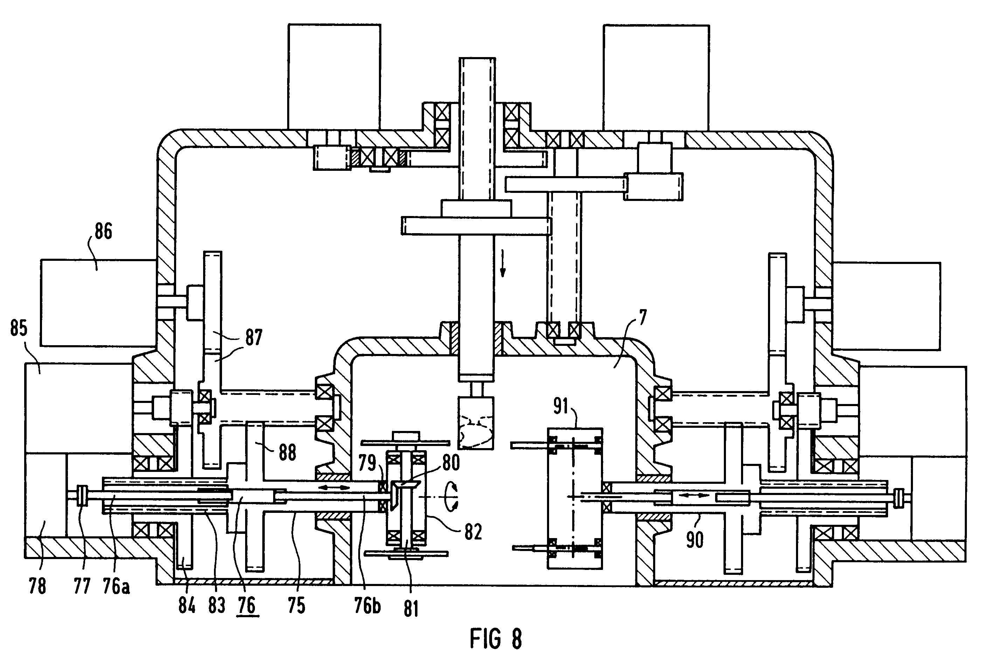

Bevor der Arbeitsablauf der erfindungsgemäßen Vorrichtung erläutert wird, wird unter Bezugnahme auf Figur 8 eine alternative Ausführung beschrieben, bei der die Werkzeugantriebsmotoren nicht im Werkzeugträgerkopf, sondern außerhalb desselben am Gehäuse befestigt sind. Hierzu ist an einer ebenfalls als Hohlwelle ausgebildeten Spindel 75 eine in Axialrichtung verschiebbare Teleskopwelle 76 gelagert. Der eine Abschnitt 76a der Teleskopwelle ist über eine Kupplung 77 mit einem Drehantrieb 78 verbunden. Der andere Teleskopwellenabschnitt 76b ist in einem Festlager 79 gelagert und über Kegelzahnräder 80 mit einer quer zur Längsachse der Spindel 75 angeordneten Triebwelle 81 in Eingriff, die ebenfalls über nicht näher bezeichnete Festlager am Werkzeugträgerkopf 82 gelagert ist.

Die Spindel 75 enthält an ihrem rückwärtigen, dem Drehantrieb 78 zugewandten Ende ein Trapezgewinde 83, welches mit einer entsprechenden Gegenverzahnung eines Zahnrades 84 in Eingriff steht. Dieses Zahnrad wird von einem Antriebsmotor 85 angetrieben und sorgt für eine Längsverschiebung (Vorschub) der Spindel 75.

Der darüber angeordnete Antriebsmotor 86 treibt über eine Getriebeverzahnung 87 ein drehfest auf der Spindel 75 befestigtes Zahnrad 88 an. Mit diesem Antrieb kann die Spindel um ihre Längsachse gedreht und so der Werkzeugträgerkopf 82 um 180° geschwenkt werden.

Im Prinzip gleich aufgebaut ist der Antrieb für die gegenüberliegend angeordnete Spindel 90. Der Werkzeugträgerkopf 91 enthält, wie anhand der Figur 4 beschriebene, zusätzlich zwei Winkelgetriebe zum Antrieb der fingerförmigen Fräswerkzeuge.

Wie aus der Darstellung ersichtlich, liegt bei der aufgezeigten Variante der Werkzeugantrieb außerhalb der Schleifkammer. Die Drehmomentübertragung erfolgt mittels einer Welle innerhalb der Vortriebsspindel der Vorschubeinheit für die Werkzeuge. Diese Ausführung hat den Vorteil, daß die Masse des Antriebsmotors nicht mitbewegt werden muß, wenn die Spindel gedreht oder längsverschoben wird. Dadurch ist eine bessere Beschleunigung der Vorschubeinheit gegeben. Ein weiterer Vorteil ist darin zu sehen, daß insgesamt das Bauvolumen des Werkzeugträgerkopfes kleiner gehalten werden kann. Weitere Vorteile sind in einer servicefreundlicheren Austauschbarkeit, einer besseren Kühlmöglichkeit sowie einer höheren Leistung des Antriebsmotors durch das größere Raumangebot außerhalb der Schleifkammer zu sehen.

Abschließend wird der Arbeitsablauf am Beispiel der Erstellung einer Zahnkrone erläutert. Die zu erstellende Krone ist in den Figuren 2 und 8 innerhalb des Werkstückes gestrichelt eingezeichnet.

Nach Abschluß der Konstruktion und Errechnen der Daten, die notwendig sind, um die Krone erstellen zu können, kann mit dem Schleifvorgang begonnen werden. Voraussetzung ist, daß die Schleifeinrichtung ordnungsgemäß vorbereitet wurde, d.h. daß der Wassertank gefüllt ist und alle Werkzeuge eingesetzt sind. Der Schleifvorgang kann nach Einsetzen des Keramikblockes (Werkstückes) beginnen. Der Keramikblock enthält vorteilhafterweise ein quer zur Längsachse gerichtetes Querloch (Sackloch), mit dem das Ausarbeiten der Bohrungen für den Zahnstumpf in der Krone erleichtert werden soll. Nach dem Einsetzen des Keramikblockes wird die Schleifkammer 7 dicht verschlossen; anschließend kann der eigentliche Schleifvorgang gestartet werden. Dieser beginnt zunächst mit dem Nullabgleich der Werkzeuge. Hierzu wird durch einen "touch" der Schleifscheibe deren Durchmesser und Dicke (bei einem Fingerfräser dessen Länge) geprüft und die in der Maschine vorgegebenen Werte eventuell korrigiert. Bei diesem "touch" fahren die Werkzeuge einen genauen Durchmesser am Rand des Keramikhalters oder an einer anderen geeigneten Stelle, z.B. auf der Werkzeugspindel, an. Anhand der Abbremskurven wird der Berührungspunkt und somit die Abmessung des Werkzeuges errechnet. Der dann beginnende Schleifvorgang läuft automatisch ab, indem ein Rechner anhand der konstruktionsgegebenen Daten und eines Steuerprogramms die Antriebsmotoren, die die Werkstück- und Werkzeugbewegungen bewirken, entsprechend steuert, wobei die Bewegungen der die beiden einander gegenüberliegenden Werkzeuge aufnehmenden Spindeln so gesteuert werden, daß das Werkstück praktisch simultan von beiden Werkzeugen bearbeitet wird.

Mit der Schleifscheibe, die von der einen Werkzeugspindel angetrieben wird, werden die äußeren Umrisse der Krone herausgearbeitet. Der Fingerfräser läuft praktisch der Schleifscheibe nach. Mit diesem kann ein Nachbearbeiten (Glätten) der Oberfläche und Ausarbeiten der Fissuren, die, bedingt durch den großen Radius der Schleifscheibe, von dieser nicht ausgearbeitet werden können, durchgeführt werden.

Wenn, wie bereits erwähnt, der eine Fingerfräser um 45° schräg zur Spindelebene gestellt wird, kann die Spindelbewegung praktisch auf eine Längsbewegung reduziert werden. Die Schrägstellung kann am einfachsten dadurch erreicht werden, daß das Getriebe entsprechend dem vorgesehenen Winkel am Motor angeflanscht wird.

Die Krone wird nur so weit herausgeschliffen, daß sie noch mit einem ausreichend stabilen Zapfen für die weiteren Arbeitsgänge mit dem Restkeramikblock verbunden bleibt. Statt der Schleifscheibe kann nun das gegenüberliegend angeordnete Polierwerkzeug in Arbeitsstellung geschwenkt und anschließend die Krone nachpoliert werden. Danach kann mit dem zweiten, waagerecht angeordneten Fingerfräser die Bohrung für den Zahnstumpf herausgearbeitet werden. Der Poliervorgang wird zeitlich deswegen vor der Ausarbeitung der Bohrung gelegt, weil die feinen Auslaufkanten am Übergang der Krone zum Zahnstumpf durch den Poliervorgang leicht beschädigt werden könnten.

Im letzten Arbeitsgang wird der Haltezapfen der Krone mit der Schleifscheibe abgestochen. Die Abstichstelle und die Okklusion werden anschließend von Hand nachpoliert.

Um den Poliervorgang zu verbessern, ist noch folgendes denkbar:
Im Bereich des Abstichzapfens wird mit den vorhandenen Daten ein Positiv vom Zahnstumpf aus dem restlichen Keramikkörper herausgeschliffen. Mit einem geeigneten Haftmittel, z.B. Wachs, kann sodann die fertige Krone auf den Stumpf aufgesetzt und allseitig nachpoliert werden.

## Patentansprüche

1. Vorrichtung zur Erstellung von medizinischen, insbesondere zahnmedizinischen Prothetik-Paßkörpern, mit einer Aufnahmevorrichtung (16, 17) für ein Werkstück (8), aus dem der Paßkörper erstellt wird, einer Werkstückspindel (16), die so ausgebildet ist, daß das Werkstück (8) um eine Vorschubachse gedreht und in axialer Richtung verstellt werden kann und mit einer (ersten) Werkzeug-Spindel (32), die mindestens ein in Rotation versetzbares Bearbeitungswerkzeug (11, 12) aufnimmt, wobei die Werkzeug-Spindel (32) so angeordnet und gelagert ist, daß das von ihr aufgenommene, zumindest eine Werkzeug (e) senkrecht zur Vorschubachse (47) der Werkstück-Spindel (16) zum Werkstück (8) hin und von diesem weg bewegbar ist, **dadurch gekennzeichnet,** daß mindestens eine zweite Werkzeug-Spindel (44) vorgesehen ist, die bezüglich der Bewegung relativ zum Werkstück (8) in gleicher Weise wie die erste Werkzeug-Spindel (32) angeordnet und gelagert , jedoch gegenüber dieser vorzugsweise um 180° versetzt angeordnet und getrennt von dieser angetrieben ist, wobei Steuermittel vorgesehen sind, welche die Antriebe (27, 30, 35, 49, 52) der Werkzeugaufnahmevorrichtung (16, 17) und der Werkzeug-Spindeln (32, 44) im Sinne einer simultanen Bearbeitung des Werkstückes (8) entsprechend vorgegebener Konturendaten steuern.

2. Vorrichtung nach Ansprüch 1, **dadurch gekennzeichnet,** daß die Werkzeugachse (45) bei der einen Werkzeugspindel (44) parallel und die Werkzeugachse (41, 42) bei der anderen Werkzeugspindel (32) senkrecht zur Vorschubachse (47) der Werkstückspindel (16) verläuft.

3. Vorrichtung nach Ansprüch 1 oder 2, **dadurch gekennzeichnet,** daß zumindest an der einen Werkzeugspindel (32, 44) ein Werkzeugträgerkopf (33, 45) mit jeweils zwei in Rotation versetzbaren Werkzeugen (11, 12) vorgesehen ist, die von einer gemeinsamen Welle (36, 37) angetrieben werden, und daß der Werkzeugträgerkopf um die Werkzeugspindelachse (46), vorzugsweise um 180°, schwenkbar angeordnet ist.

4. Vorrichtung nach Anspruch 3, **dadurch gekennzeichnet,** daß beide Werkzeugspindeln (32, 44) mit einem schwenkbaren Werkzeugträgerkopf (33, 45) und je zwei rotierenden Werkzeugen (11, 12) versehen sind.

5. Vorrichtung nach Anspruch 4, **dadurch gekennzeichnet,** daß jeder Werkzeugträgerkopf (33, 45) zur Aufnahme von zwei jeweils gleichartigen Werkzeugen (11, 12) ausgebildet ist.

6. Vorrichtung nach Anspruch 5, **dadurch gekennzeichnet,** daß der eine Werkzeugträgerkopf (45) zur Aufnahme von zwei scheibenförmigen Werkzeugen (12) und der andere (33) zur Aufnahme von zwei fingerförmigen Werkzeugen (11) ausgebildet ist.

7. Vorrichtung nach Anspruch 1, **dadurch gekennzeichnet,** daß die Antriebsmotoren für den Dreh- und den Vorschubantrieb des Werkstückes und der Werkzeuge außerhalb der Bearbeitungskammer (7) des Gehäuses (6) angeordnet sind, und zur Bewegungsübertragung als Hohlwellen ausgebildete Vorschubspindeln vorgesehen sind, in denen zur Drehmomentübertragung für den Drehantrieb dienende Teleskopwellen gelagert sind (Fig. 8).

8. Vorrichtung nach einem der Ansprüche 1 bis 7, **dadurch gekennzeichnet,** daß elektromotorische Antriebe vorgesehen sind, die an einem äußeren Gehäuseteil befestigt sind und die von diesen Antrieben ausgehenden Triebwellen an dem die Bearbeitungskammer bildenden inneren Gehäuseteil gelagert sind (Fig. 8).

9. Vorrichtung nach Anspruch 3, **dadurch gekennzeichnet,** daß für den Drehantrieb der Werkzeuge (11, 12) im Werkzeugträgerkopf (33, 35) angeordnete Elektromotoren (35) vorgesehen sind.

10. Vorrichtung nach Anspruch 9, **dadurch gekennzeichnet,** daß für beide in einem Werkzeugträgerkopf (33, 45) angeordnete Werkzeuge (11) ein gemeinsamer Antriebsmotor (35) vorgesehen ist, der beidseitig Antriebswellen (36, 37) enthält, die mit einem links- und einem rechtsgängigen Freilauftriebwellenabschnitt (38, 39) gekuppelt sind.

11. Vorrichtung nach Anspruch 1, **dadurch gekennzeichnet,** daß die Werkstück- und Werkzeugspindeln (16, 32, 44) so angeordnet sind, daß deren Achsen in einer Ebene liegen.

12. Vorrichtung nach Anspruch 6, **dadurch gekennzeichnet,** daß die Achsen der Triebwellen (41, 42) der fingerförmigen Werkzeuge (11) bezogen auf eine Bezugsebene am Werkzeugträgerkopf (33), um einen spitzen Winkel, vorzugsweise um 45°, gegeneinander versetzt angeordnet sind.

13. Vorrichtung nach Anspruch 1, **dadurch gekennzeichnet,** daß zur Erzielung der Drehbewegung der Spindeln (16, 32, 44) um ihre Vorschubachse (44, 47) achsparallel zu den Spindeln eine von einem Motor (30, 52) angetriebene Zahnwelle (29, 53) gelagert ist, deren Drehbewegung über ein Zahnrad (28, 51) oder einen Zahnriemen auf die Spindel (16, 32) übertragen wird.

14. Vorrichtung nach Anspruch 13, **dadurch gekennzeichnet,** daß bei Verwendung eines Zahnrades ein spielfreies, federbelastetes Doppelzahnrad (28, 51) verwendet ist.

15. Vorrichtung nach einem der Ansprüche 1 bis 14, **dadurch gekennzeichnet,** daß die Spindeln (16, 32, 44) bzw. die an diesen befestigten Zahnräder (28, 51) einerseits und korrespondierend angeordnete ortsfeste Teile (6) andererseits mit Mitteln (54, 55) zur Erfassung zumindest der Ausgangsposition der Spindeln versehen sind.

16. Vorrichtung nach einem der Ansprüche 3 bis 15, **dadurch gekennzeichnet,** daß im Gehäuse (6) Mittel (56-59; 71-74) für die Zufuhr von Druckluft und/oder eines Pflegemittels an die Werkzeugträgerköpfe (33, 45) vorgesehen sind.

17. Vorrichtung nach Anspruch 16, **dadurch gekennzeichnet,** daß das Gehäuse (6) eine Kammer (15) aufweist, in der ein Pflegemittel enthaltender Behälter (57) leicht auswechselbar gehaltert ist.

18. Vorrichtung nach Anspruch 17, **dadurch gekennzeichnet,** daß der Austritt des Pflegemittels aus dem Behälter (57) mittels eines Magnetventils (59) gesteuert wird.

19. Vorrichtung nach Anspruch 18, **dadurch gekennzeichnet,** daß mit Hilfe des Magnetventils (59) die Zufuhr sowohl von Druckluft als auch von Pflegemittel gesteuert wird.

20. Vorrichtung nach einem der Ansprüche 1 bis 19, **dadurch gekennzeichnet,** daß Steuermittel vorgesehen sind, welche die Zufuhr der Druckluft und/oder des Pflegemittels automatisch steuern.

21. Vorrichtung nach einem der Ansprüche 1 bis 20, **dadurch gekennzeichnet,** daß Gehäuse (6), Spindeln (16, 32, 44) und Triebwellen aus Material mit aufeinander abgestimmtem thermischem Längenausdehnungskoeffizienten bestehen.

22. Vorrichtung nach einem der Ansprüche 1 bis 21, **dadurch gekennzeichnet,** daß am Gehäuse (6) oder in Nähe zumindest einer der Spindeln (16, 32, 44) ein Thermofühler (70) angeordnet ist, welcher die Umgebungstemperatur der Spindel bzw. Temperaturänderungen in diesem Bereich erfaßt und einem Rechner zuführt, welcher bei Abweichungen von einem Sollwert dem zugehörigen Antriebsmotor (27) ein Steuersignal im Sinne einer Nachstellung der Spindel (16) in die eine oder andere Stellrichtung gibt.

23. Vorrichtung nach einem der Ansprüche 1 bis 22, **dadurch gekennzeichnet,** daß der Bearbeitungskammer (7), vorzugsweise ein als Schubfach ausgebildeter Wassertank (14) zugeordnet ist, welcher mit einer den Tank in einen Frischwasserabschnitt (63) und einen Abwasserabschnitt (62) unterteilenden Trennwand (61) versehen ist, die so gestaltet ist, daß sie für Wasser durchlässig ist, Schmutzpartikel dagegen zurückhält.

## Claims

1. Arrangement for producing medical, in particular dental prosthetic fitting bodies, having a receiving arrangement (16, 17) for a work piece (8) from which the fitting body is produced, a work piece spindle (16) which is formed in such a way that the work piece (8) can be rotated about a feed axis and can be adjusted in an axial direction, and having a (first) tool spindle (32) which receives at least one processing tool (11, 12) which can be set rotating, with the tool spindle (32) being arranged and mounted in such a way that the at least one tool (e), which is received by it, can be moved perpendicularly relative to the feed axis (47) of the work piece spindle (16) towards and away from the work piece (8), characterised in that there is provided at least one second tool spindle (44) which is arranged and mounted in the same way as the first tool spindle (32) in relation to the movement relative to the work piece (8), yet is arranged so as to be offset in respect of said tool spindle (32) preferably by 180° and is driven separately therefrom, with control means being provided that control the drives (27, 30, 35, 49, 52) of the tool-receiving arrangement (16, 17) and the tool spindles (32, 44) for the purpose of simultaneously processing the work piece (8) in accordance with given contour data.

2. Arrangement according to claim 1, characterised in that the tool axis (45) in the case of the one tool spindle (44) extends so as to be parallel to the feed axis (47) of the work piece spindle (16) and the tool axis (41, 42) in the case of the other tool spindle (32) extends so as to be perpendicular to the feed axis (47) of the work piece spindle (16).

3. Arrangement according to claim 1 or 2, characterised in that provided at least on the one tool spindle (32, 44) there is a tool carrier head (33, 45) having in each case two tools (11, 12) which can be set rotating and which are driven by a common shaft (36, 37) and in that the tool carrier head is arranged so that it can be swung about the tool spindle axis (46), preferably by 180°.

4. Arrangement according to claim 3, characterised in that both tool spindles (32, 44) are provided with a tool carrier head (33, 45), which can be swung, and respectively two rotating tools (11, 12).

5. Arrangement according to claim 4, characterised in that each tool carrier head (33, 45) is formed so as to receive two respectively similar tools (11, 12).

6. Arrangement according to claim 5, characterised in that the one tool carrier head (45) is formed so as to receive two disc-shaped tools (12) and the other (33) is formed so as to receive two finger-shaped tools (11).

7. Arrangement according to claim 1, characterised in that the drive motors for the rotary drive and the feed drive of the work piece and of the tools are arranged outside the processing chamber (7) of the housing (6) and provided for the transmission of motion there are feed spindles which are formed as hollow shafts and in which are mounted telescopic shafts which are used for the transmission of torque for the rotary drive (Figure 8).

8. Arrangement according to one of the claims 1 to 7, characterised in that electromotive drives are provided, which drives are secured to an outer housing portion and the driving shafts issuing from these drives are mounted on the inner housing portion which forms the processing chamber (Figure 8).

9. Arrangement according to claim 3, characterised in that electric motors (35), which are arranged in the tool carrier head (33, 35) (sic), are provided for the rotary drive of the tools (11, 12).

10. Arrangement according to claim 9, characterised in that provided for both tools (11), which are arranged in a tool carrier head (33, 45), there is a common drive motor (35) which on both sides contains drive shafts (36, 37) which are coupled with a left-hand and a right-hand free-running driving shaft section (38, 39).

11. Arrangement according to claim 1, characterised in that the work piece spindles and tool spindles (16, 32, 44) are arranged in such a way that their axes lie in one plane.

12. Arrangement according to claim 6, characterised in that the axes of the driving shafts (41, 42) of the finger-shaped tools (11) are arranged so as to be offset in respect of each other relative to a reference plane on the tool carrier head (33), by an acute angle, preferably by 45°.

13. Arrangement according to claim 1, characterised in that in order to achieve the rotary movement of the spindles (16, 32, 44) about their feed axis (44, 47), mounted axis-parallel to the spindles there is a toothed shaft (29, 53) which is driven by a motor (30, 52) and the rotary movement of which is transmitted to the spindle (16, 32) by way of a toothed wheel (28, 51) or a toothed belt.

14. Arrangement according to claim 13, characterised in that when a toothed wheel is used a play-free, spring-loaded double toothed wheel (28, 51) is used.

15. Arrangement according to one of the claims 1 to 14, characterised in that the spindles (16, 32, 44) or the toothed wheels (28, 51) which are secured thereto, on the one hand, and correspondingly arranged stationary portions (6), on the other hand, are provided with means (54, 55) for the detection of at least the starting position of the spindles.

16. Arrangement according to one of the claims 3 to 15, characterised in that means (56-59; 71-74) are provided in the housing (6) for the supply of compressed air and/or a dressing to the tool carrier heads (33, 45).

17. Arrangement according to claim 16, characterised in that the housing (6) has a chamber (15) in which a container (57) containing a dressing is supported in a manner such that it can easily be exchanged.

18. Arrangement according to claim 17, characterised in that the discharge of the dressing out of the container (57) is controlled by means of an electromagnetic valve (59).

19. Arrangement according to claim 18, characterised in that the supply both of compressed air and of dressing is controlled with the aid of the electromagnetic valve (59).

20. Arrangement according to one of the claims 1 to 19, characterised in that control means are provided that automatically control the supply of the compressed air and/or the dressing.

21. Arrangement according to one of the claims 1 to 20, characterised in that housing (6), spindles (16, 32, 44) and driving shafts consist of material with coefficients of linear thermal expansion which are matched to each other.

22. Arrangement according to one of the claims 1 to 21, characterised in that arranged on the housing (6) or close to at least one of the spindles (16, 32, 44) there is a thermistor (70) which detects, and supplies to a computer, the ambient temperature of the spindle or changes in temperature in this region, said computer, in the event of deviations from a rated value, transmitting a control signal to the associated drive motor (27) for the purpose of adjusting the spindle (16) in the one or other direction of adjustment.

23. Arrangement according to one of the claims 1 to 22, characterised in that associated with the processing chamber (7) there is preferably a water tank (14) which is formed as a drawer and which is provided with a partition wall (61) which subdivides the tank into a fresh water section (63) and a waste water section (62) and is shaped in such a way that it is permeable to water, yet holds back dirt particles.

## Revendications

1. Dispositif pour fabriquer les ébauches de prothèses médicales et notamment dentaires, comportant un dispositif de réception (16,17) pour une pièce à traiter (8), à partir de laquelle est formée l'ébauche, une broche porte-pièce (16), qui est agencée de telle sorte que la pièce à traiter (8) puisse être entraînée en rotation autour d'un axe d'avance et être déplacée dans une direction axiale, et une (première) broche porte-outil (32), qui reçoit au moins un outil de traitement (11,12) pouvant être entraîné en rotation, la broche porte-outil (32) étant disposée et supportée de telle sorte qu'au moins un outil (e), logé dans cette broche, peut être rapproché et écarté de la pièce à traiter (8), perpendiculairement à l'axe d'avance (47) de la broche porte-pièce (16), caractérisé par le fait qu'il est prévu au moins une seconde broche porte-outil (44), qui est disposée et supportée, en ce qui concerne un déplacement par rapport à la pièce à traiter (8), de la même manière que la première broche porte-outil (32), et est disposée en étant de préférence décalée de 180° par rapport à cette dernière et en étant entraînée séparément de cette dernière, des moyens de commande étant prévus pour commander les dispositifs d'entraînement (27,30,35,49,52) du dispositif de logement d'outil (16,17) et des broches porte-outil (32,44) dans le sens d'un usinage simultané de la pièce à traiter (8) conformément à des données prédéterminées de profil.

2. Dispositif suivant la revendication 1, caractérisé par le fait que l'axe (45) de l'outil, dans le cas d'une broche porte-outil (44), est parallèle à l'axe d'avance (47) de la broche porte-pièce (16) et que l'axe (41,42) de l'outil pour l'autre broche porte-outil (32) est perpendiculaire audit axe d'avance.

3. Dispositif suivant la revendication 1 ou 2, caractérisé par le fait qu'au moins sur une broche porte-outil (32,44) est prévue une tête porte-outil (33,45) comportant respectivement deux outils (11,12) pouvant être entraînés en rotation, qui sont entraînés par un arbre commun (36,37), et que la tête porte-outil est disposée de manière à pouvoir basculer, de préférence sur 180°, autour de l'axe (46) de la broche porte-outil.

4. Dispositif suivant la revendication 3, caractérisé par le fait que les deux broches porte-outil (32,44) sont équipées d'une tête porte-outil basculante (33,45) et de respectivement deux outils rotatifs (11,12).

5. Dispositif suivant la revendication 4, caractérisé par le fait que chaque tête porte-outil (33,45) est agencée de manière à loger deux outils respectivement identiques (11,12).

6. Dispositif suivant la revendication 5, caractérisé par le fait qu'une tête porte-outil (45) est conçue pour loger deux outils en forme de disques (12) et que l'autre (33) est agencé de manière à loger deux outils en forme de doigts (11).

7. Dispositif suivant la revendication 1, caractérisé par le fait que les moteurs d'entraînement pour l'entraînement en rotation et l'entraînement d'avance de la pièce à traiter et des outils sont disposés à l'extérieur de la chambre d'usinage (7) du boîtier (6), et que pour la transmission du déplacement sont prévues des broches d'avance réalisées sous la forme d'arbres creux et dans lesquelles sont tourillonnés des arbres télescopiques utilisés pour la transmission du couple pour l'entraînement en rotation (figure 8).

8. Dispositif suivant l'une revendications 1 à 7, caractérisé par le fait qu'il est prévu des dispositifs d'entraînement à moteur électrique, qui sont fixés sur une partie extérieure du boîtier et que les arbres entraînés, qui sortent de ces dispositifs d'entraînement, sont tourillonnés sur la partie intérieure du boîtier, qui constitue la chambre d'usinage (figure 8).

9. Dispositif suivant la revendication 3, caractérisé par le fait que des moteurs électriques (35) disposés dans la tête porte-outil (33,35) sont prévus pour l'entraînement en rotation des outils (11,12).

10. Dispositif suivant la revendication 9, caractérisé par le fait que pour les deux outils (11) disposés dans une tête porte-outil (33,45) est prévu un moteur d'entraînement commun (35), qui contient, des deux côtés, des arbres d'entraînement (36,37), qui sont accouplés à des sections d'arbre d'entraînement à roue libre (38,39), qui tournent à gauche et qui tournent à droite.

11. Dispositif suivant la revendication 1, caractérisé par le fait que les broches porte-pièces et porte-outils (16,32,44) sont disposées de telle sorte que leurs axes sont situés dans un plan.

12. Dispositif suivant la revendication 6, caractérisé par le fait que les axes des arbres entraînés (41,42) des outils en forme de doigts (11) sont décalés réciproquement d'un angle aigu, de préférence 45°, par rapport à un plan de référence au niveau de la tête porte-outil (33).

13. Dispositif suivant la revendication 1, caractérisé par le fait que pour l'obtention du mouvement de rotation des broches (16,32,44) autour de l'arbre d'avance (44,47), parallèlement à l'axe des broches est tourillonné un arbre denté (29,53), qui est entraîné par un moteur (30,52) et dont le mouvement de rotation est transmis, par l'intermédiaire d'un pignon (28,51) ou d'une courroie dentée, à la broche (16,32).

14. Dispositif suivant la revendication 13, caractérisé par le fait que dans le cas de l'utilisation d'un pignon, on utilise un pignon double sans jeu (28,51), qui est chargé par un ressort.

15. Dispositif suivant l'une des revendications 1 à 14, caractérisé par le fait que, d'une part, les broches (16,32,44) ou les pignons (28,51), qui sont fixés sur ces broches et que, d'autre part, des parties fixes (6), disposées de façon correspondante, sont équipées de moyens (54,55) pour détecter au moins la position initiale des broches.

16. Dispositif suivant l'une des revendications 3 à 15, caractérisé par le fait que dans le boîtier (6) sont prévus des moyens (56-59; 71-74) pour envoyer de l'air comprimé et/ou un agent de nettoyage aux têtes porte-outils (33,45).

17. Dispositif suivant la revendication 16, caractérisé par le fait que le boîtier (6) comporte une chambre (15), dans laquelle un récipient (57) contenant un agent de nettoyage est retenu de manière à être aisément interchangeable.

18. Dispositif suivant la revendication 17, caractérisé par le fait que la sortie de l'agent de nettoyage hors du récipient (57) est commandée au moyen de soupapes magnétiques (59).

19. Dispositif suivant la revendication 18, caractérisé par le fait que l'envoi aussi bien d'air comprimé que d'un agent de nettoyage est commandé au moyen de la soupape magnétique (59).

20. Dispositif suivant l'une des revendications 1 à 19, caractérisé par le fait qu'il est prévu des moyens de commande, qui commandent automatiquement l'envoi de l'air comprimé et/ou de l'agent de nettoyage.

21. Dispositif suivant l'une des revendications 1 à 20, caractérisé par le fait que le boîtier (6), les broches (16,32,44) et les arbres entraînés sont réalisés en des matériaux possédant des coefficients de dilatation thermique accordés les uns sur les autres.

22. Dispositif suivant l'une des revendications 1 à 21, caractérisé par le fait que dans le boîtier (6) ou à proximité d'au moins l'une des broches (16,32,44) est disposé un capteur thermique (70), qui détecte la température ambiante de la broche ou des variations de température dans cette zone et les envoie à un ordinateur qui, en cas d'écart par rapport à une valeur de consigne, envoie au moteur d'entraînement associé (27) un signal de commande dans le sens d'un asservissement de la broche (16) dans l'un ou l'autre sens de réglage.

23. Dispositif suivant l'une des revendications 1 à 22, caractérisé par le fait qu'à la chambre d'usinage (7) est associé de préférence un réservoir d'eau (14) réalisé sous la forme d'un tiroir et qui est équipé d'une paroi de séparation (61) qui divise le réservoir en une section pour eau fraîche (63) et une section pour eaux usées (62) et qui est agencée de telle sorte qu'elle laisse passer l'eau, mais retient les particules de saletés.
